# EUROPÄISCHE PATENTSCHRIFT

(11) **EP 3 208 216 B1**
(45) Veröffentlichungstag und Bekanntmachung des Hinweises auf die Patenterteilung: **20.02.2019**
(21) Anmeldenummer: 16156754.0
(22) Anmeldetag: 22.02.2016
(51) Int. Cl.: B65G 47/90, B25J 15/00, B66C 1/59

(54) **GREIFER, ROBOTER MIT GREIFER UND VERFAHREN ZUM GREIFEN VON OBJEKTEN**
GRIPPER, ROBOT WITH A GRIPPER AND METHOD FOR GRIPPING OBJECTS
DISPOSITIF DE PREHENSION, ROBOT COMPRENANT UN DISPOSITIF DE PREHENSION ET PROCEDE DE PREHENSION D'OBJETS

(43) Veröffentlichungstag der Anmeldung: 23.08.2017
(73) Patentinhaber: Magazino GmbH, 80687 München (DE)
(72) Erfinder: Franke, Kai, 80687 München (DE); Schmutz, Philipp, 80805 München (DE)
(74) Vertreter: Stellbrink & Partner Patentanwälte mbB

(56) Entgegenhaltungen:
- EP-A2- 0 145 630
- DE-C- 862 825
- SU-A1- 1 611 822
- US-A- 5 248 177
- US-A1- 2002 113 448

## Beschreibung

Die vorliegende Erfindung betrifft einen Greifer, insbesondere zum Greifen von biegeschlaffen Objekten, einen Roboter, der einen solchen Greifer aufweist sowie ein Verfahren, das einen solchen Greifer bzw. einen solchen Roboter nutzt.
Die Bedürfnisse des Versandhandels erfordern nicht mehr das Handling von großen Warengebinden, wie etwa Paletten, sondern vielmehr das individuelle Handling und den individuellen Transport von einzelnem Stückgut. So ist es notwendig, viele stark unterschiedliche Gegenstände aus Lageranordnungen zu vereinzeln bzw. greifen zu können und im nachfolgenden Prozess zum Kunden zu transportieren. Noch setzt die Logistikbranche für diesen Vereinzelungsprozess stark auf den Einsatz von einer großen Menge an Personal. Es wäre aber wünschenswert, diesen Prozess zunehmend zu automatisieren. Hierfür werden Greifapparate bzw. Greifer benötigt, die in unterschiedlichen Szenarien Objekte in den Lagern der Logistik vereinzeln können. Insbesondere sind verschiedene Greifer notwendig, um unterschiedlich ausgestaltete Objekte sicher und zuverlässig greifen zu können
Es gibt verschiedene Greifkonzepte, die bei Robotern eingesetzt werden können, um unterschiedliche Objekte zu greifen. Bei einem ersten Greifkonzept wird ein Greifer eingesetzt, der in seinem Mechanismus einer menschlichen Hand ähnelt. Ein solcher Greifer verfügt über mehrere "Finger", die sich voneinander weg und zueinander hin bewegen können, um ein Objekt freizugeben bzw. zu greifen. Derartige Greifer bedürfen einer relativ aufwendigen Steuerung bzw. Regelung und sind daher relative fehleranfällig und kostenintensiv. Ein weiteres "Greifkonzept" basiert auf einem Greifer mit einem Unterdruck bzw. Sog, mittels dem ein Objekt an den Greifer herangesaugt werden kann. Solche Greifer eignen sich in erster Linie für das Handling von flachen Objekten (zum Beispiel eingeschweißten Büchern oder DVDs), sind aber für eine Vielzahl von anderen Objekten ungeeignet.
Eine besondere Herausforderung stellt es dar, biegeschlaffe Objekte bzw. Gegenstände, die üblicherweise locker in Folie eingepackt sind, zu greifen. Beispiele für solche Objekte sind Stofflagen und Kleidungsstücke, beispielsweise Hemden, die in Folien eingepackt sind. Derartige Objekte sind von herkömmlichen Greifern bzw. Robotersystemen nur schwer zu handhaben. US 2002/0113448 A1 beschreibt ein Greifer nach dem Oberbegriff von Anspruch 1.

Es ist daher eine Aufgabe der vorliegenden Erfindung, die Unzulänglichkeiten bzw. Probleme aus dem Stand der Technik zu überwinden bzw. abzuschwächen. Insbesondere ist es eine Aufgabe der vorliegenden Erfindung, biegeschlaffe Objekte oder Gegenstände, die üblicherweise in Folien locker eingepackt sind und mit herkömmlichen Robotergreifsystemen nur schwer zu handhaben sind, verlässlich zu greifen. In anderen Worten beschäftigt sich die vorliegende Erfindung mit dem Problem des Greifens und Ablegens von in biegeschlaffe Materialien gehüllten Objekten oder biegeschlaffen Gegenständen selbst - beispielsweise mit einem Robotersystem und wobei die Objekte zum Beispiel von einem Stapel oder einer Anhäufung gegriffen werden sollen. Ebenso ist es eine Aufgabe der Erfindung, einen Greifer, einen Roboter und ein Greifverfahren bereit zu stellen, die die Probleme aus dem Stand der Technik überwinden bzw. abschwächen können. Weiterhin ist es eine Aufgabe der vorliegenden Erfindung, die Systeme aus dem Stand der Technik weiter zu verbessern.

Diese Aufgaben werden von dem Greifer nach Anspruch 1, dem Roboter nach Anspruch 11 und dem Verfahren nach Anspruch 12 gelöst.
Gemäß einem ersten Aspekt wird ein Greifer bereitgestellt. Der Greifer weist eine erste Rolle auf, die zur Drehung um eine erste Drehachse ausgelegt ist. Weiter weist der Greifer eine Klemmvorrichtung auf. Die erste Rolle und die Klemmvorrichtung sind derart angeordnet, dass ein Objekt durch Drehung mindestens der ersten Rolle zwischen der ersten Rolle und der Klemmvorrichtung einklemmbar ist.
Hierdurch wird ein geeigneter Mechanismus bereit gestellt, mit dem insbesondere biegeschlaffe Objekte sicher und zuverlässig in einer mechanisch einfachen Art und Weise gegriffen werden können. Anders ausgedrückt können also dünnschichtige Objekte bzw. Objekte in dünnschichtigen Hüllen bzw. Materialien gezielt geklemmt und hierdurch gegriffen werden.
Allgemein kann ein solcher Greifer, der auch als Greifapparat bezeichnet werden kann, auch als "Aufwälzgreifer" bezeichnet werden - er wälzt den zu greifenden Gegenstand, beispielsweise eine Stofflage oder ein eingeschweißtes Kleidungsstück auf, um ihn zu greifen. Der Greifer kann zum Greifen von biegeschlaffen Objekten ausgelegt sein.

Die erste Drehachse und die Klemmvorrichtung können einen fixen Abstand zueinander haben.

In anderen Worten ist eine Position der ersten Rolle und der Klemmvorrichtung zueinander also vorgegeben und nicht veränderbar. Alternativ könnte man von einem unveränderlichen Abstand sprechen.

Hierdurch kann eine besonders einfach zu handhabende Vorrichtung erreicht werden - durch den fixen Abstand zwischen der Drehachse und Klemmvorrichtung ist der Klemmvorgang sehr wiederholbar, was eine geeignete Steuerung/Regelung dieses Vorgangs erleichtert. Außerdem kann durch den fixen Abstand eine größere Kraft beim Einklemmen erreicht werden als es möglich wäre, wenn der Abstand zwischen der Drehachse und der Klemmvorrichtung veränderbar wäre.

Die Klemmvorrichtung kann eine Fläche aufweisen, entlang der das Objekt verschoben werden kann.

Insbesondere kann es sich bei der Fläche um eine unbewegliche Fläche handeln, was diese Fläche beispielsweise von einer Zylinderfläche einer zur Rotation fähigen Rollen unterscheidet.

Das kann eine besonders einfache und wenig fehleranfällige Ausführungsform mit besonders wenig Verschleißteilen bereitstellen.

Beispielsweise kann es sich bei der Klemmvorrichtung um eine schräge Fläche oder eine Fläche handeln, die einem im Bezug auf den Greifer raumfesten Zylinderabschnitt entspricht, entlang der das Objekt gleiten kann.

Die Klemmvorrichtung kann auch als eine zweite Rolle ausgestaltet sein, die zur Drehung um eine zweite Drehachse ausgelegt ist.

Typischerweise ist die zweite Rolle dann derart ausgelegt, dass sie sich gegenläufig zur ersten Rolle drehen kann. Auch dies stellt eine besonders einfach und geeignet aufgebaute Ausführungsform dar.
Die erste und/oder die zweite Rolle können eine glatte Oberfläche aufweisen. Die Rollen können auch als Walzen ausgestaltet sein.
Die erste Rolle und die zweite Rolle können sich berühren.

Insbesondere kann es einen haftreibschlüssigen Kontakt zwischen den Rollen geben.

Die erste Rolle ist erfindungsgemäß als erstes Greifzahnrad ausgestaltet.

Die zweite Rolle ist erfindungsgemäß als zweites Greifzahnrad ausgestaltet. Bei den Greifzahnrädern handelt es sich um Zahnräder, die ausgelegt sind, das Objekt zwischen sich einzuklemmen. Insbesondere kann es sich um im Querschnitt in etwa sternförmige Rollen handeln, wobei die Sterne mehrzackig ausgebildet sind, zum Beispiel 6, 7, 8, 9, 10 oder 12-zackig.

Die ersten und zweiten Greifzahnräder sind erfindungsgemäß derart angeordnet, dass sie ineinander eingreifen.
Die ersten und zweiten Greifzahnräder können jeweils einen maximalen Radius R aufweisen und der fixe Abstand zwischen den Drehachsen kann d sein und die folgende Gleichung erfüllen: d < 2R, bevorzugt d < 0,9 x 2R, weiter bevorzugt d < 0,8 x 2R, zum Beispiel d < 0,6 x 2R.

Ein derartiger erfindungsgemäßer fixer Abstand zwischen den Greifzahnrädern stellt einen geeigneten Greifmechanismus für die zu greifenden Objekte bereit.
Der maximale Radius R der Greifzahnräder kann zum Beispiel 20 bis 50 mm betragen und der Abstand d zwischen den Drehachsen kann zum Beispiel 20 bis 50 mm, beispielsweise 32 mm betragen.

Der Greifer kann eine Motor- und Kontrolleinheit aufweisen und der Greifer kann derart eingerichtet sein, dass die Motor- und Kontrolleinheit zumindest die erste Rolle antreibt.

Damit, dass diese Einheit zumindest die erste Rolle antreibt ist gemeint, dass die Einheit in einigen Ausführungsformen nur die erste Rolle antreibt (zum Beispiel, wenn die Klemmvorrichtung als unbewegliche Fläche ausgestaltet ist) und in anderen Ausführungsformen sowohl die erste Rolle als auch weitere Abschnitte (zum Beispiel die zweite Rolle).

Insbesondere kann die Motor- und Kontrolleinheit auch eine Datenverarbeitungseinrichtung aufweisen. Die Motor- und Kontrolleinheit kann insbesondere zur Steuerung bzw. Regelung des Greifers ausgelegt sein. Daher kann die Motor- und Kontrolleinheit auch als Motor- und Steuereinheit bzw. Motor- und Regelungseinheit bezeichnet werden.

Der Greifer kann ein Getriebe zwischen Motor- und Kontrolleinheit und zumindest der ersten Rolle aufweisen, wobei das Getriebe ausgelegt ist, eine Rotation der Motor- und Kontrolleinheit ins Langsame zu übersetzen.

Dies kann insbesondere durch eine geeignete Auswahl an Zahnrädern erzielt werden, die einen Motor der Motor- und Kontrolleinheit mit zumindest der ersten Rolle verbindet.

Beispielsweise kann der Greifer ein Antriebszahnrad aufweisen, welches von der Motor- und Kontrolleinheit angetrieben wird und welches seinerseits mit einem Abtriebszahnrad der ersten Rolle in Verbindung steht.

Der Greifer kann derart eingerichtet sein, dass die Motor- und Kontrolleinheit die zweite Rolle antreibt.

Dies kann beispielsweise dadurch erzielt werden, dass das bzw. ein Antriebszahnrad über ein Zwischenzahnrad mit einem Abtriebszahnrad der zweiten Rolle in Verbindung steht. In einem solchen Fall kann das Getriebe zwischen Motor- und Kontrolleinheit einerseits und erster und zweiter Rolle andererseits vorgesehen sein. Allgemein ist es möglich, dass die ersten und zweiten Rollen synchron, beispielsweise von einem Motor, und gegenläufig angetrieben werden.

Der Greifer kann derart eingerichtet sein, dass die zweite Rolle ausschließlich über die erste Rolle angetrieben wird.

Das kann einen besonders einfachen Aufbau mit möglichst wenig Teilen ermöglichen, was zu einer Gewichteinsparung führen kann. Hierdurch kann der Greifer mit relativ wenig Leistung betrieben werden bzw. es steht mehr Leistung für das Halten und Transportieren der Objekte zur Verfügung.

Die Motor- und Kontrolleinheit kann ausgelegt sein, die erste Rolle und zweite Rolle unabhängig voneinander anzutreiben.

Beispielsweise kann dies dadurch erzielt werden, dass die Motor- und Kontrolleinheit zwei Motoren, insbesondere Elektromotoren, aufweist, und jeder Motor zum Antrieb jeweils einer Rolle vorgesehen ist. Hierdurch wird eine separate Steuerung der Rollen möglich.

Der Greifer kann einen Drehmomentsensor aufweisen, der ausgelegt ist, eine Größe zu erfassen, die von einem Drehmoment zur Drehung zumindest der ersten Rolle abhängt.

Die Motor- und Kontrolleinheit kann einen Elektromotor zum Antrieb zumindest der ersten Rolle aufweisen und der Drehmomentsensor kann als Strommesser oder Leistungsmesser ausgestaltet sein, der dazu eingerichtet ist, einen zur Drehung der mindestens einen Rolle benötigten Strom bzw. eine dazu benötigte Leistung zu erfassen.

Die Motor- und Kontrolleinheit kann eingerichtet sein, die erfasste Größe mit einem Schwellwert zu vergleichen und ein Erreichen bzw. Überschreiten des Schwellwertes als erfolgreichen Greifvorgang zu interpretieren und/oder eine weitere Drehung der mindestens einen Rolle bei Erreichen bzw. Überschreiten des Schwellwertes zu verhindern.

Über einen derartigen Mechanismus kann der Greifvorgang sehr geeignet und zuverlässig detektiert werden. Es müssen keine zusätzlichen aufwendigen, teuren und fehleranfälligen Sensoren bereitgestellt werden, um den Greifvorgang zu überwachen, sondern es kann an Hand von vorhandenen Daten analysiert werden, ob das Greifen eines Objektes erfolgreich war.

Der Greifer kann einen Drehmomentbegrenzer aufweisen.

Eine solche Ausgestaltung kann den Greifer und das zu greifende Objekt vor Beschädigungen schützen.

Der Greifer kann ein Gehäuse mit einer Abschlussplatte aufweisen und die erste Rolle und die Klemmvorrichtung können sich durch die Abschlussplatte erstrecken.

Das kann verschiedene empfindliche Elemente des Greifers vor Umwelteinflüssen (zum Beispiel Schmutz und Feuchtigkeit) schützen.

Die erste Rolle und/oder die Klemmvorrichtung kann eine Haftbeschichtung aufweisen.

Die Haftbeschichtung kann aus einem Material gebildet sein, das bezogen auf Polyethylen (PE), beispielsweise auf PE-Folie, einen Haftreibungskoeffizienten µ_{H} im Bereich von 0,3 bis 1,5 hat.

Die Haftbeschichtung kann aus einem Material gebildet sein, das bezogen auf Polyethylen (PE), beispielsweise auf PE-Folie, einen Haftreibungskoeffizienten µ_{H} im Bereich von 0,4 bis 0,8, bevorzugt 0,5 bis 0,7, wie zum Beispiel 0,6 hat.

Beispielsweise kann die Haftbeschichtung aus Polyurethan gebildet sein.

Die Haftbeschichtung kann aus einem Material gebildet sein, das bezogen auf Polyethylen (PE), beispielsweise auf PE-Folie, einen Haftreibungskoeffizienten µ_{H} im Bereich von 0,8 bis 1,2, bevorzugt 0,9 bis 1,1 und weiter bevorzugt im Bereich 0,96 bis 1,04 hat.

Beispielsweise kann die Haftbeschichtung aus Polyvinylchlorid gebildet sein.

Eine derartige Haftbeschichtung kann einen besonders geeigneten Greifvorgang zwischen dem Greifer und dem zu greifenden Objekt begünstigen.

Der Greifer kann einen Anschlag aufweisen, um eine Eindringtiefe des biegeschlaffen Objektes in den Greifer zu begrenzen.

Auch dies kann eine Beschädigung des zu greifenden Objektes bzw. des Greifers verhindern bzw. weniger wahrscheinlich machen.

Der Greifer kann einen Abstandssensor bzw. einen Näherungssensor aufweisen, der ausgelegt ist, einen Abstand zwischen dem Greifer und einem zu greifenden Objekt zu erfassen bzw. zu erfassen, wenn sich der Greifer einem zu greifenden Objekt annähert.

Gemäß einem weiteren Aspekt wird ein Roboter bereitgestellt mit einem Greifer wie vorstehend beschrieben.

Der Greifer kann an einem Ende eines Roboterarms angeordnet sein.

Der Roboter kann ein mobiler Roboter mit Rädern zum Fahren sein.

Weiterhin wird ein Verfahren bereitgestellt. Das Verfahren hat die Schritte Bereitstellen eines Objektes, Bereitstellen eines Greifers bzw. eines Roboters wie vorstehend beschrieben, Positionieren des Greifers derart, dass zumindest die erste Rolle das Objekt berührt, Drehung zumindest der ersten Rolle derart, dass das Objekt zwischen der ersten Rolle und der Klemmvorrichtung eingeklemmt wird.

Das Objekt kann ein biegeschlaffes Objekt sein.

Das Verfahren kann weiter den folgenden Schritt umfassen:
Erfassen einer Größe, die von einem Drehmoment zur Drehung zumindest der ersten Rolle abhängt.

Die erfasste Größe kann ein zur Drehung der mindestens einen Rolle benötigter Strom bzw. eine dazu benötigte Leistung sein.

Das Verfahren kann weiter den folgenden Schritt umfassen:
Vergleichen der erfassten Größe mit einem Schwellwert und Beenden der Drehung der mindestens einen Rolle, wenn der Schwellwert erreicht bzw. überschritten wird.

Das Verfahren kann weiter den folgenden Schritt umfassen:
Transportieren des biegeschlaffen Objektes im eingeklemmten Zustand von einem ersten Ort zu einem zweiten Ort.

Es kann ein mobiler Roboter mit Rädern zum Fahren bereitgestellt werden und das Transportieren kann das Fahren des Roboters umfassen.

Das Verfahren kann weiter den folgenden Schritt umfassen:
Drehung zumindest der ersten Rolle am zweiten Ort derart, dass das Objekt am zweiten Ort abgelegt wird.

Das biegeschlaffe Objekt kann ein Hemd in einer Folie ist.

Durch die vorstehenden Maßnahmen wird ein selbsttätiger Greifer zum gezielten Klemmen von dünnschichtigen Objekten oder Objekten in dünnschichtiger Hüllen bereitgestellt. Dieser kann zur Montage an einem Robotersystem ausgebildet sein. Ebenso wird ein Verfahren zur Steuerung eines Apparates zum Greifen und gezielten Ablegen von dünnschichtigen, oder in dünnschichtige Materialien gehüllte Objekte an einem mobilen Roboter bereitgestellt. Der Greifer ist geeignet, an einem mobilen Roboter angebracht zu werden und kann dabei als Endeffektor agieren. Mit der vorliegenden Erfindung wird ein großer Teil der zu greifenden Objekte abgedeckt. Der Greifer eignet sich gut um dünne, biegeschlaffe Gegenstände oder in dünne Verpackungen verschweißte Gegenstände aufzunehmen.

Ausführungsformen der Erfindung werden nun an Hand der beigefügten Zeichnungen beschrieben.
- Figur 1: zeigt eine erste perspektivische Ansicht auf einen Greifer und ein biegeschlaffes Objekt;
- Figur 2: zeigt eine zweite perspektivische Ansicht auf den Greifer und das Objekt;
- Figur 3: zeigt eine Draufsicht mit teilweiser Durchsicht auf den Greifer und das Objekt; und
- Figur 4: zeigt eine weitere Draufsicht mit teilweiser Durchsicht auf einen Teil des Objektes und den Greifer.

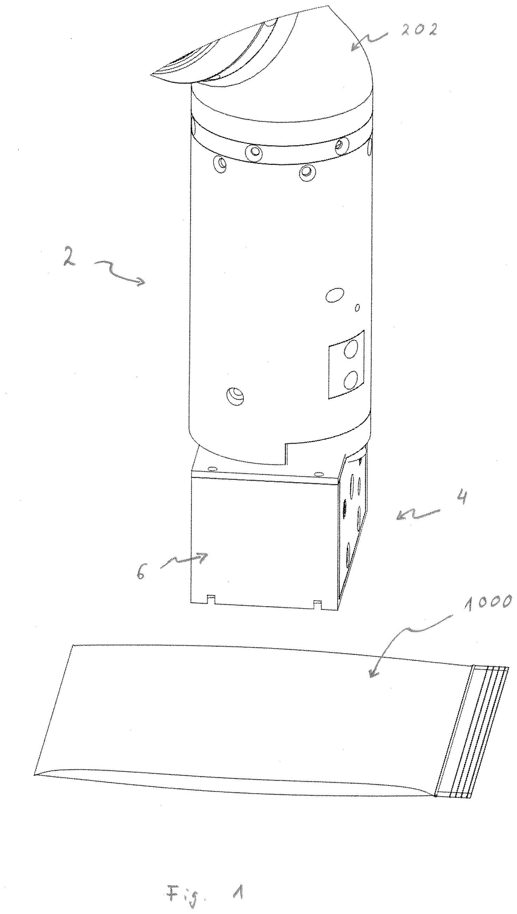

Figur 1 zeigt einen Greifer 4, der an einem Ende 2 eines Roboterarms angebracht sein kann und damit als ein Endeffektor des Roboterarms bzw. des (nicht dargestellten) Roboters dienen kann. Der Roboterarm kann weiterhin über mindestens ein Gelenk 202 verfügen, um den Greifer 4 geeignet zu positionieren. Bei dem (nicht dargestellten) Roboter kann es sich insbesondere um einen mobilen Roboter handeln, der neben dem Roboterarm beispielsweise Räder aufweist und hierdurch als mobiler Roboter ausgestaltet ist. Ein Beispiel für einen solchen Roboter ist beispielsweise offenbart in der EP16151220.7, die vom Anmelder am 14. Januar 2016 eingereicht wurde und die durch Bezugnahme hierin aufgenommen wird.

Der Greifer 4 kann ein Gehäuse 6 aufweisen und ist insbesondere zum Greifen eines relativ biegeschlaffen Objektes 1000 ausgebildet. Bei dem Objekt 1000 kann es sich beispielsweise um ein dünnschichtiges Material, beispielsweise eine Stofflage handeln. Ebenso kann es sich bei dem Objekt 1000 um eine Folie handeln oder um ein Objekt, welches in einer Folie angeordnet ist - beispielsweise Hemden oder andere Kleidungsstücke, die in einer Folie angeordnet sind.

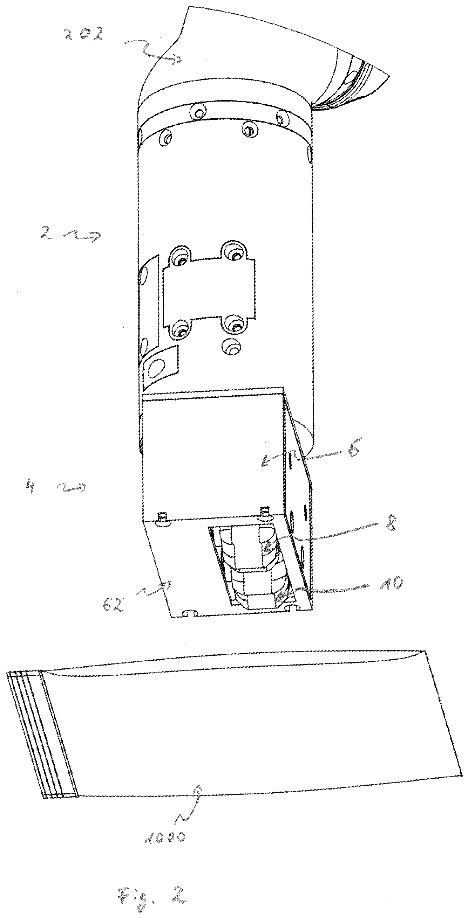

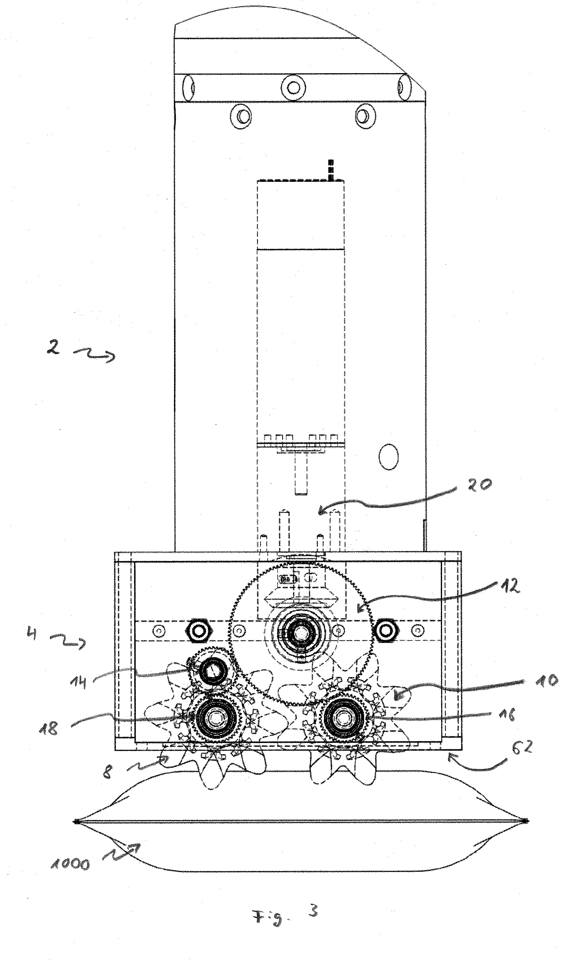

Der Greifer 4 ist dazu ausgelegt, derartige dünnschichtige bzw. biegeschlaffe Objekte 1000 greifen zu können. Hierzu weist der Greifer 4 zwei Rollen 8, 10 auf (siehe Figuren 2 bis 4). In der dargestellten Ausführungsform weist das Gehäuse 6 eine Abschlussplatte 62, die auch als untere Abschlussplatte bezeichnet werden kann, auf und die Rollen 8, 10 erstrecken sich durch die untere Abschlussplatte 62. Das kann vorteilhaft sein, um die Rollen 8, 10 und weitere Elemente des Greifers 4 vor Verschmutzungen und Umwelteinflüssen zu schützen.

Weiterhin kann der Greifer 4 einen Abstands- und/oder Näherungssensor aufweisen, der dazu ausgelegt ist, einen Abstand zwischen dem Greifer 4 und dem zu greifenden Objekt 1000 zu detektieren bzw. zu detektieren, wenn sich der Greifer 4 dem Objekt 1000 annähert. Hierdurch kann ein Greifvorgang zur geeigneten Zeit gestartet werden - beispielsweise kann der Greifer 4 beginnen, die Rollen 8, 10 zu rotieren, wenn sich der Greifer 4 in unmittelbarer Nähe bzw. in Kontakt zu dem zu greifenden Objekt 1000 befindet.

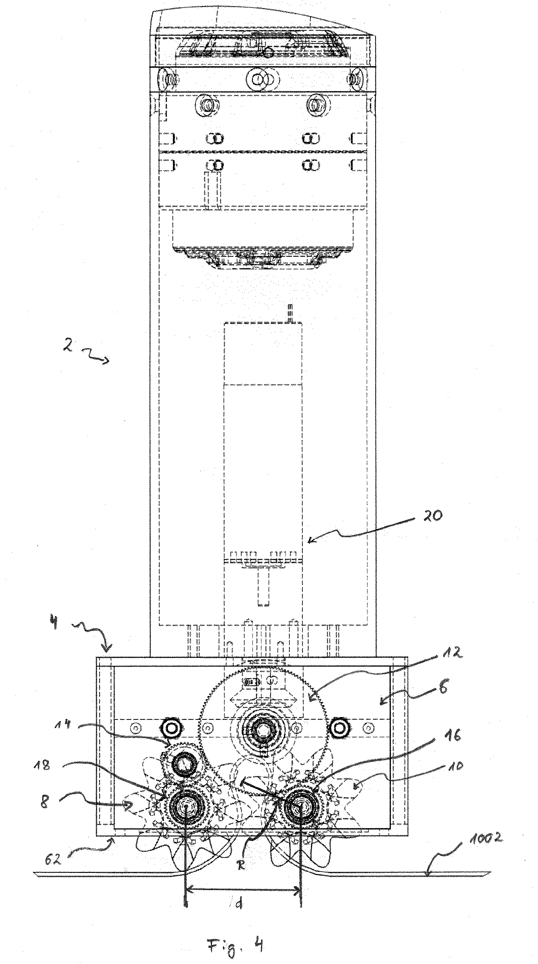

Die Rollen 8, 10 können beispielsweise als haftreibschlüssige Walzen ausgebildet sein. Im gezeigten Ausführungsbeispiel sind die Rollen 8, 10 jeweils sternförmig bzw. als Greifzahnräder 8, 10 ausgebildet. Die Greifzahnräder 8, 10 haben einen maximalen Radius R (siehe Figur 4). Beide Greifzahnräder drehen sich um ihren jeweiligen Mittelpunkt und die Mittelpunkte sind um einen fixen Abstand d voneinander versetzt, wobei dieser Abstand d bevorzugt kleiner ist als zwei R. In anderen Worten greifen die Greifzahnräder 8, 10 also ineinander bzw. weisen eine ineinander greifende Verzahnung auf.

Der Greifer 4 weist ferner eine Motor- und Kontrolleinheit 20 auf, die beispielsweise einen Motor und eine Steuerung bzw. Regelung aufweisen kann. Diese Einheit 20 ist ausgelegt, ein Antriebszahnrad 12 anzutreiben. Antriebszahnrad 12 steht direkt mit einem Abtriebszahnrad 16 der Rolle 10 und über ein Zwischen- bzw. Umlenkzahnrad 14 mit einem Abtriebszahnrad 18 der Rolle 10 in Verbindung. Zwischen der Motor- und Kontrolleinheit 20 und den Rollen 8, 10 ist also ein Getriebe vorgesehen. In einer Ausführungsform weist die Motor- und Kontrolleinheit 20 einen elektrischen Motor auf.

In der Verwendung wird der Greifer 4 in geeigneter Weise auf einer oberen Lage 1002 des Objektes 1000 bzw. einfach auf dem Objekt 1000 positioniert, sodass die in diesem Ausführungsbeispiel als Greifzahnräder ausgestalteten Rollen 8, 10 das Objekt 1000 kontaktieren. Der Motor treibt dann über die genannten Zahnräder 12, 14 die Rollen bzw. Greifzahnräder 8, 10 an. Der Antrieb erfolgt in einer solchen Art und Weise, dass sich die Greifzahnräder 8, 10 in dem Bereich, wo sie einander kontaktieren bzw. am nächsten sind nach oben drehen, während sie sich in den Bereichen, wo sie am weitesten voneinander entfernt sind, nach unten drehen. In anderen Worten, dreht sich das rechte Greifzahnrad 10 also im Uhrzeigersinn, während sich das linke Greifzahnrad 8 entgegengesetzt dem Uhrzeigersinn dreht. Hierdurch wird ein Abschnitt des biegeschlaffen Objektes 1000 von den Greifzahnrädern 8, 10 eingezogen und nach oben bewegt. Es wird zwischen den Greifzahnrädern 8, 10 eingeklemmt.

Durch das eingeklemmte Objekt 1000 wird es "schwieriger", die Greifzahnräder 8, 10 weiter in die einklemmende Richtung zu drehen. Das bedeutet, es erfordert ein größeres Drehmoment, die Rollen 8, 10 weiter in diese Richtung zu drehen. Gemäß einer bevorzugten Ausführungsform wird das Drehmoment, welches notwendig ist, um die Greifzahnräder 8, 10 gegeneinander zu verdrehen, detektiert. Bei einem elektrischen Motor kann dies beispielsweise dadurch geschehen, dass der Strom gemessen wird, der notwendig ist, um die Greifzahnräder 8, 10 weiter zu drehen (ebenso ist es möglich, die entsprechende Leistung zu messen). Ab einem bestimmten Schwellenwert des Drehmoments, welches notwendig ist, um die Greifzahnräder 8, 10 weiter zu verdrehen, interpretiert die Motor- und Kontrolleinheit 20 dies als einen erfolgreichen Greifvorgang und stoppt das weitere Verdrehen der Greifzahnräder 8, 10. Die Motor- und Kontrolleinheit 20 interpretiert dies als einen erfolgreichen Greifvorgang und stoppt das weitere Verdrehen der Greifzahnräder 8, 10 gegeneinander. Stattdessen werden die Greifzahnräder 8, 10 in der entsprechenden Position gehalten, sodass das Objekt 1000 zwischen den Greifzahnrädern 8, 10 gehalten wird. Der Greifer 4 kann nun mit dem gehaltenen Objekt 1000 an einem anderen Ort gebracht werden - entweder kann der Roboterarm anders positioniert werden oder der gesamte mobile Roboter kann anders positioniert werden, bis sich der Greifer 4 mit dem gehaltenen Objekt 1000 an einer Stelle befindet, wo das Objekt 1000 abgeladen werden soll. An einer solchen Position bewirkt die Motor- und Kontrolleinheit 20, dass sich die Greifzahnräder 8, 10 derart drehen, dass das Objekt 1000 frei gegeben wird - das heißt, die in Figur 4 rechts dargestellte Rolle 10 dreht sich gegen den Uhrzeigersinn, während sich die in Figur 4 links dargestellte Rolle 8 mit dem Uhrzeigersinn dreht.

Der vorstehend beschriebene Mechanismus, welcher das Drehmoment bzw. den Stromfluss nutzt, um ein erfolgreiches Greifen zu detektieren, stellt eine besonders einfache und praktikable Art und Weise dar, ein Greifen sicher zu detektieren. Weiter führt die damit einhergehende Drehmomentsbegrenzung dazu, dass der zu greifende Gegenstand 1000 vor exzessiven Kräften geschützt wird und kann damit dazu beitragen, Schäden am zu greifenden Gegenstand zu verhindern.

In anderen Worten kann also eine Decklage des zu hebenden oder abzulegenden Gegenstandes bzw. Objektes 1000 mit zwei engstehenden, gegenläufig rotierenden Rollen bzw. Walzen oder Greifzahnrädern 8, 10 haftreibschlüssig kontaktiert werden. Der sich ausbildende resultierende Vektor hebt die Decklage und führt sie zwischen die rotierenden Rollen 8, 10. Die nachfließende Decklage führt zur Erhöhung des notwendigen Drehmomentes an den Rollen/Walzen 8,10. Diese Drehmomenterhöhung wird von einer geeigneten Regeleinrichtung 20 erkannt und als erfolgreicher Griff interpretiert. Hierdurch erlaubt es das Steuerungsverfahren, verlässlich zu bestimmen, ob ein Objekt sicher gegriffen wurde. Anschließend wird der Drehwinkel konstant gehalten und das Objekt 1000 mit Hilfe des Roboters an den Bestimmungsort gebracht. Eine solche momentenbegrenzte (bzw. strombegrenzte) Regelung in der vorliegenden Form ist mit Elektromotoren gut umsetzbar.

Nochmals anders ausgedrückt stellt das beschriebene Ausführungsbeispiel zwei gegenläufig rotierende Walzen 8, 10 in enger Anordnung zueinander bereit. Diese werden im vorliegenden Fall von einem Zahn- bzw. Stirnradgetriebe angetrieben und gewährleisten eine synchrone Momentenübertragung auf beide Zahnräder. Weiterhin sind die Walzen 8, 10 mit einer Momentenbegrenzung versehen. Die Walzen 8, 10 werden auf eine dünnschichtige Unterlage gedrückt und sind so in der Lage, gezielt speziell dünnschichtige Objekte 1000 wirkungsvoll zu vereinzeln. Ein oder mehrere Elektromotoren können zum Antrieb der rotierenden Walzen 8, 10 genutzt werden. Die Walzen 8, 10 können über eine geeignete Beschichtung zur Verstärkung der Haftreibung zwischen Objekt 1000 und Greifer 4 verfügen. Die Walzen 8, 10 können je nach Anwendungsfall mit einer glatten oder evtl. verzahnten Außengeometrie ausgeführt werden - wobei sie im dargestellten Ausführungsbeispiel als Greifzahnräder 8, 10 dargestellt sind. Weiterhin ist es vorteilhaft, wenn der Weg innerhalb des Greifes 4 bzw. innnerhalb der Greifeinheit ab einer gewissen Eintauchtiefe durch einen geeigneten Anschlag, oder eine ähnlich wirkende technische Einrichtung begrenzt wird. Dabei können entweder beide Walzen 8, 10 direkt (ohne Zwischenschaltung der anderen Rolle 10, 8) synchron angetrieben werden oder es kann nur eine Walze, 8, 10 angetrieben werden, und die Walzen 8, 10 dann ineinandergreifende Verzahnung aufweisen, wobei die Verzahnung ein ausreichend großes Nennspiel hat, um ein Einklemmen des Objektes 1000 zu ermöglichen.

Während vorstehend eine Ausführungsform der Erfindung beschrieben wurde, dürfte klar sein, dass nicht alle beschriebenen Merkmale für die Erfindung notwendig oder wesentlich sind und sich die beschriebene Technologie auch mit anderen bzw. abgewandelten Mitteln nutzen lässt. So müssen beispielsweise nicht notwendigerweise beide Rollen bzw. Greifzahnräder 8, 10 über Abtriebszahnräder 16 bzw. 18 verfügen. Ebenso ist es möglich, dass lediglich eine der Rollen bzw. eines der Greifzahnräder über ein Abtriebszahnrad angetrieben wird und sich die andere Rolle bzw. das andere Greifzahnrad 8, 10 durch die Rotation der angetriebenen Rolle bzw. des angetriebenen Greifzahnrads 8, 10 mitdreht, also über die angetriebene Rolle bzw. das angetriebene Greifzahnrad 8, 10 angetrieben wird. Ebenso sind auch Ausgestaltungen denkbar, in denen nur eine Rolle bzw. ein Greifzahnrad 8, 10 verwendet wird und die andere Rolle bzw. das andere Greifzahnrad 8, 10 durch eine Fläche ersetzt wird, an welcher der zu greifende Gegenstand 1000 mittels der Rolle bzw. des Greifzahnrads 8, 10 entlang bewegt wird.
Die Erfindung umfasst ebenfalls die genauen oder exakten Ausdrücke, Merkmale, numerischen Werte oder Bereiche usw., wenn vorstehend oder nachfolgend diese Ausdrücke, Merkmale, numerischen Werte oder Bereiche im Zusammenhang mit Ausdrücken wie z.B. "etwa, ca., um, im Wesentlichen, im Allgemeinen, zumindest, mindestens" usw. genannt wurden (also "etwa 3" soll ebenfalls "3" oder "im Wesentlichen radial" soll auch "radial" umfassen). Der Ausdruck "bzw." kann überdies "und/oder" bedeuten.

Die folgenden Aspekte werden beschrieben:
1. Greifer (4) zum Greifen von biegeschlaffen Objekten (1000), der aufweist:
   ein erstes Greifzahnrad (10), das zur Drehung um eine erste Drehachse ausgelegt ist,
   ein zweites Greifzahnrad (8), das zur Drehung um eine zweite Drehachse ausgelegt ist,
   wobei das erste Greifzahnrad (10) und das zweite Greifzahnrad (8) derart angeordnet sind, dass sie ineinander eingreifen und derart, dass das biegeschlaffe Objekt (1000) durch Drehung des ersten Greifzahnrads (10) und des zweiten Greifzahnrads (8) zwischen den Greifzahnrädern (10, 8) einklemmbar ist,
   wobei die Drehachsen einen festen Abstand zueinander haben.
2. Greifer (4) nach dem vorangehenden Aspekt, wobei sich das erste Greifzahnrad (10) und das zweite Greifzahnrad (8) berühren.
3. Greifer (4) nach einem der vorangehenden Aspekte, wobei die ersten und zweiten Greifzahnräder (10, 8) jeweils einen maximalen Radius R aufweisen und wobei der fixe Abstand zwischen den Drehachsen d ist und die folgende Gleichung erfüllt: d < 2R, bevorzugt d < 0,9 x 2R, weiter bevorzugt d < 0,8 x 2R, zum Beispiel d < 0,6 x 2R.
4. Greifer (4) nach einem der vorangehenden Aspekte, wobei der Greifer (4) eine Motor- und Kontrolleinheit (20) aufweist und der Greifer (4) derart eingerichtet ist, dass die Motor- und Kontrolleinheit (20) zumindest das erste Greifzahnrad (10) antreibt.
5. Greifer (4) nach dem vorangehenden Aspekt, wobei der Greifer (4) ein Getriebe zwischen Motor- und Kontrolleinheit (20) und zumindest dem ersten Greifzahnrad (10) aufweist, wobei das Getriebe ausgelegt ist, eine Rotation der Motor- und Kontrolleinheit (20) ins Langsame zu übersetzen.
6. Greifer (4) nach einem der zwei vorangehenden Aspekte, wobei der Greifer (4) derart eingerichtet ist, dass die Motor- und Kontrolleinheit (20) das zweite Greifzahnrad (8) antreibt.
7. Greifer (4) nach dem vorangehenden Aspekt, wobei der Greifer (4) derart eingerichtet ist, dass das zweite Greifzahnrad (8) ausschließlich über das erste Greifzahnrad (10) angetrieben wird.
8. Greifer (4) nach dem vorletzten Aspekt, wobei die Motor- und Kontrolleinheit (20) ausgelegt ist, das erste Greifzahnrad (10) und zweite Greifzahnrad (8) unabhängig voneinander anzutreiben.
9. Greifer (4) nach einem der fünf vorangehenden Aspekte, wobei der Greifer (4) einen Drehmomentsensor aufweist, der ausgelegt ist, eine Größe zu erfassen, die von einem Drehmoment zur Drehung zumindest des ersten Greifzahnrads (10) abhängt.
10. Greifer (4) nach dem vorangehenden Aspekt, wobei die Motor- und Kontrolleinheit (20) einen Elektromotor zum Antrieb zumindest des ersten Greifzahnrad (10) aufweist und wobei der Drehmomentsensor als Strommesser oder Leistungsmesser ausgestaltet ist, der dazu eingerichtet ist, einen zur Drehung des mindestens einen Greifzahnrads (10) benötigten Strom bzw. eine dazu benötigte Leistung zu erfassen.
11. Greifer (4) nach einem der zwei vorangehenden Aspekte, wobei die Motor- und Kontrolleinheit (20) eingerichtet ist, die erfasste Größe mit einem Schwellwert zu vergleichen und ein Erreichen bzw. Überschreiten des Schwellwertes als erfolgreichen Greifvorgang zu interpretieren und/oder eine weitere Drehung des mindestens einen Greifzahnrads bei Erreichen bzw. Überschreiten des Schwellwertes zu verhindern.
12. Greifer (4) nach einem der vorangehenden Aspekte, wobei der Greifer (4) einen Drehmomentbegrenzer aufweist.
13. Greifer (4) nach einem der vorangehenden Aspekte, wobei der Greifer (4) ein Gehäuse (6) mit einer Abschlussplatte (62) aufweist und sich das erste Greifzahnrad (10) und das zweite Greifzahnrad (8) durch die Abschlussplatte (62) erstrecken.
14. Greifer (4) nach einem der vorangehenden Aspekte, wobei das erste Greifzahnrad (10) und/oder das zweite Greifzahnrad (8) eine Haftbeschichtung aufweisen.
15. Greifer (4) nach dem vorangehenden Aspekt, wobei die Haftbeschichtung aus einem Material gebildet ist, das bezogen auf Polyethylen (PE), beispielsweise auf PE-Folie, einen Haftreibungskoeffizienten µ_{H} im Bereich von 0,3 bis 1,5 hat.
16. Greifer (4) nach dem vorangehenden Aspekt, wobei die Haftbeschichtung aus einem Material gebildet ist, das bezogen auf Polyethylen (PE), beispielsweise auf PE-Folie, einen Haftreibungskoeffizienten µ_{H} im Bereich von 0,4 bis 0,8, bevorzugt 0,5 bis 0,7, wie zum Beispiel 0,6 hat.
   Beispielsweise kann die Haftbeschichtung aus Polyurethan gebildet sein.
17. Greifer (4) nach dem vorletzten Aspekt, wobei die Haftbeschichtung aus einem Material gebildet ist, das bezogen auf Polyethylen (PE), beispielsweise auf PE-Folie, einen Haftreibungskoeffizienten µ_{H} im Bereich von 0,8 bis 1,2, bevorzugt 0,9 bis 1,1 und weiter bevorzugt im Bereich 0,96 bis 1,04 hat.
   Beispielsweise kann die Haftbeschichtung aus Polyvinylchlorid gebildet sein.
18. Greifer (4) nach einem der vorangehenden Aspekte, wobei der Greifer (4) einen Anschlag aufweist, um eine Eindringtiefe des biegeschlaffen Objektes (1000) in den Greifer (4) zu begrenzen.
19. Greifer (4) nach einem der vorangehenden Ansprüche, wobei der Greifer (4) einen Abstandssensor bzw. Näherungssensor aufweist, der ausgelegt ist, einen Abstand zwischen dem Greifer (4) und einem zu greifenden Objekt (1000) zu erfassen bzw. zu erfassen, wann sich der Greifer (4) einem zu greifendem Objekt (1000) annähert.
20. Roboter mit einem Greifer (4) nach einem der vorangehenden Aspekte.
21. Roboter nach dem vorangehenden Aspekt, wobei der Greifer (4) an einem Ende eines Roboterarms (2) angeordnet ist.
22. Roboter nach einem der beiden vorangehenden Aspekte, wobei der Roboter ein mobiler Roboter mit Rädern zum Fahren ist.
   V1. Verfahren mit den folgenden Schritten:
      Bereitstellen eines biegeschlaffen Objektes (1000),
      Bereitstellen eines Greifers (4) oder eines Roboters nach einem der vorangehenden Aspekte,
      Positionieren des Greifers (4) derart, dass die Greifzahnräder (10, 8) das Objekt (1000) berühren,
      Drehung der Greifzahnräder (10, 8) derart, dass das Objekt (1000) zwischen den Greifzahnrädern (10, 8) eingeklemmt wird.
      Wann immer Verfahrensschritte in einer bestimmten Reihenfolge genannt werden, werden die Schritte bevorzugt, aber nicht notwendigerweise in der genannten Reihenfolge durchgeführt.
      Verfahrensaspekte werden mit einem "V" abgekürzt. Wenn auf vorangehende Verfahrensaspekte verwiesen wird, sind damit die vorangehenden Aspekte gemeint, die mit einem "V" gekennzeichnet sind.
   V2. Verfahren nach dem vorangehenden Aspekt und weiter mit dem Schritt
      Erfassen einer Größe, die von einem Drehmoment zur Drehung zumindest des ersten Greifzahnrad (10) abhängt.
   V3. Verfahren nach dem vorangehenden Aspekt,
      wobei die erfasste Größe ein zur Drehung des mindestens einen Greifzahnrads (10) benötigter Strom bzw. eine dazu benötigte Leistung ist.
   V4. Verfahren nach einem der beiden vorangehenden Aspekte und weiter mit dem Schritt
      Vergleichen der erfassten Größe mit einem Schwellwert und Beenden der Drehung des mindestens einen Greifzahnrads (10), wenn der Schwellwert erreicht bzw. überschritten wird.
   V5. Verfahren nach einem der vorangehenden Verfahrensaspekten und weiter mit dem Schritt
      Transportieren des biegeschlaffen Objektes (1000) im eingeklemmten Zustand von einem ersten Ort zu einem zweiten Ort.
   V6. Verfahren nach dem vorangehenden Aspekt,
      wobei ein Roboter nach Aspekt 22 bereitgestellt wird und wobei das Transportieren das Fahren des Roboters umfasst.
   V7. Verfahren nach einem der beiden vorangehenden Aspekte und weiter mit dem Schritt
      Drehung zumindest des ersten Greifzahnrads (10) am zweiten Ort derart, dass das Objekt (1000) am zweiten Ort abgelegt wird.
   V8. Verfahren nach einem der vorangehenden Verfahrensaspekte, wobei das Objekt (1000) ein Hemd in einer Folie ist.

## Patentansprüche

1. Greifer (4) zum Greifen von biegeschlaffen Objekten (1000), der aufweist:
ein erstes Greifzahnrad (10), das zur Drehung um eine erste Drehachse ausgelegt ist,
ein zweites Greifzahnrad (8), das zur Drehung um eine zweite Drehachse ausgelegt ist,
**dadurch gekennzeichnet, dass** das erste Greifzahnrad (10) und das zweite Greifzahnrad (8) derart angeordnet sind, dass sie ineinander eingreifen und derart, dass das biegeschlaffe Objekt (1000) durch Drehung des ersten Greifzahnrad (10) und des zweiten Greifzahnrads (8) zwischen den Greifzahnrädern (10, 8) einklemmbar ist,
wobei die Drehachsen einen fixen Abstand zueinander haben.

2. Greifer (4) nach Anspruch 1, wobei die ersten und zweiten Greifzahnräder (10, 8) jeweils einen maximalen Radius R aufweisen und wobei die Drehachsen parallel zueinander sind, und wobei der fixen Abstand der Drehachsen d ist und die folgende Gleichung erfüllt: d < 2R, bevorzugt d < 0,9 x 2R, weiter bevorzugt d < 0,8 x 2R, zum Beispiel d < 0,6 x 2R.

3. Greifer (4) nach einem der vorangehenden Ansprüche, wobei der Greifer (4) eine Motor- und Kontrolleinheit (20) aufweist und der Greifer (4) derart eingerichtet ist, dass die Motor- und Kontrolleinheit (20) die Greifzahnräder (10, 8) antreibt.

4. Greifer (4) nach dem vorangehenden Anspruch, wobei der Greifer (4) ein Getriebe zwischen Motor- und Kontrolleinheit (20) und den Greifzahnrädern (8, 10) aufweist, wobei das Getriebe ausgelegt ist, eine Rotation der Motor- und Kontrolleinheit (20) ins Langsame zu übersetzen.

5. Greifer (4) nach einem der zwei vorangehenden Ansprüche, wobei der Greifer (4) einen Drehmomentsensor aufweist, der ausgelegt ist, eine Größe zu erfassen, die von einem Drehmoment zur Drehung der Greifzahnräder (10, 8) abhängt.

6. Greifer (4) nach dem vorangehenden Anspruch, wobei die Motor- und Kontrolleinheit (20) einen Elektromotor zum Antrieb der Greifzahnräder (10) aufweist und wobei der Drehmomentsensor als Strommesser oder Leistungsmesser ausgestaltet ist, der dazu eingerichtet ist, einen zur Drehung der Greifzahnräder (10) benötigten Strom bzw. eine dazu benötigte Leistung zu erfassen.

7. Greifer (4) nach einem der zwei vorangehenden Ansprüche, wobei die Motor- und Kontrolleinheit (20) eingerichtet ist, die erfasste Größe mit einem Schwellwert zu vergleichen und ein Erreichen bzw. Überschreiten des Schwellwertes als erfolgreichen Greifvorgang zu interpretieren und/oder eine weitere Drehung der Greifzahnräder (10, 8) bei Erreichen bzw. Überschreiten des Schwellwertes zu verhindern.

8. Greifer (4) nach einem der vorangehenden Ansprüche, wobei der Greifer (4) einen Drehmomentbegrenzer aufweist.

9. Greifer (4) nach einem der vorangehenden Ansprüche, wobei der Greifer (4) ein Gehäuse (6) mit einer Abschlussplatte (62) aufweist und sich die Greifzahnräder (10, 8) durch die Abschlussplatte (62) erstrecken, wobei die Greifzahnräder (10, 8) eine Haftbeschichtung aufweisen.

10. Greifer (4) nach einem der vorangehenden Ansprüche, wobei der Greifer (4) einen Abstandssensor bzw. einen Näherungssensor aufweist, der ausgelegt ist, einen Abstand zwischen dem Greifer (4) und einem zu greifenden Objekt (1000) zu erfassen bzw. zu erfassen, wann sich der Greifer (4) einem zu greifendem Objekt (1000) annähert.

11. Roboter mit einem Greifer (4) nach einem der vorangehenden Ansprüche, wobei der Greifer (4) an einem Ende eines Roboterarms (2) angeordnet ist und wobei der Roboter ein mobiler Roboter mit Rädern zum Fahren ist.

12. Verfahren mit den folgenden Schritten:
Bereitstellen eines biegeschlaffen Objektes (1000),
Bereitstellen eines Greifers (4) oder eines Roboters nach einem der vorangehenden Ansprüche,
Positionieren des Greifers (4) derart, dass die Greifzahnräder (10, 8) das Objekt (1000) berühren,
Drehung der Greifzahnräder (10, 8) derart, dass das Objekt (1000) zwischen den Greifzahnrädern (10, 8) eingeklemmt wird.

13. Verfahren nach dem vorangehenden Anspruch und weiter mit den Schritten
Erfassen einer Größe, die von einem Drehmoment zur Drehung der Greifzahnräder abhängt,
Vergleichen der erfassten Größe mit einem Schwellwert und Beenden der Drehung der Greifzahnräder (10, 8), wenn der Schwellwert erreicht bzw. überschritten wird.

14. Verfahren nach dem vorangehenden Anspruch,
wobei die erfasste Größe ein zur Drehung der Greifzahnräder (10, 8) benötigter Strom bzw. eine dazu benötigte Leistung ist.

15. Verfahren nach einem der Ansprüche 12 bis 14 und weiter mit dem Schritten
Transportieren des biegeschlaffen Objektes (1000) im eingeklemmten Zustand von einem ersten Ort zu einem zweiten Ort, und
Drehung der ersten Greifzahnräder (10, 8) am zweiten Ort derart, dass das Objekt (1000) am zweiten Ort abgelegt wird,
wobei ein Roboter nach Anspruch 11 bereitgestellt wird und wobei das Transportieren das Fahren des Roboters umfasst.

## Claims

1. Gripper (4) for gripping limp objects (1000), comprising:
a first gripper gear (10) adapted to rotate about a first axis of rotation,
a second gripper gear (8) adapted to rotate about a second axis of rotation,
**characterized in that**
the first gripper gear (10) and the second gripper gear (8) are located so that they engage with each other and so that the limp object (1000) can be clamped between the gripper gears (10, 8) by rotating the first gripper gear (10) and the second gripper gear (8),
wherein the axes of rotation have a fixed distance to each other.

2. Gripper (4) according to claim 1, wherein the first and second gripper gears (10, 8) each have a maximum radius R and wherein the axes of rotation are parallel to each other, and wherein the fixed distance of the axes of rotation is d and satisfies the following equation: d < 2R, preferably d < 0.9 x 2R, further preferably d < 0.8 x 2R, for example d < 0.6 x 2R.

3. Gripper (4) according to one of the preceding claims, wherein the gripper (4) comprises a motor and control unit (20) and the gripper (4) is configured such that the motor and control unit (20) drives the gripper gears (10, 8).

4. Gripper (4) according to the preceding claim, the gripper (4) having a transmission between the motor and control unit (20) and the gripper gears (8, 10), the transmission being adapted to gear down a rotation of the motor and control unit (20).

5. Gripper (4) according to one of the two preceding claims, the gripper (4) having a torque sensor adapted to detect a quantity dependent on a torque for rotating the gripper gears (10, 8).

6. Gripper (4) according to the preceding claim, the motor and control unit (20) having an electric motor for driving the gripper gears (10) and the torque sensor being realized as a current meter or power meter which is adapted to detect a current required for rotating the gripper gears (10) or a power required for this purpose.

7. Gripper (4) according to one of the two preceding claims, wherein the motor and control unit (20) is adapted to compare the detected quantity with a threshold value and to interpret reaching or exceeding the threshold value as a successful gripping process and/or to prevent further rotation of the gripping gears (10, 8) upon reaching or exceeding the threshold value.

8. Gripper (4) according to any of the foregoing claims, the gripper (4) comprising a torque limiter.

9. Gripper (4) according to any of the foregoing claims, said gripper (4) comprising a housing (6) having an end plate (62) and said gripper gears (10, 8) extending through said end plate (62), said gripper gears (10, 8) having an adhesive coating.

10. Gripper (4) according to one of the preceding claims, wherein the gripper (4) has a distance sensor or a proximity sensor which is adapted to detect a distance between the gripper (4) and an object (1000) to be gripped and/or to detect when the gripper (4) approaches an object (1000) to be gripped.

11. Robot with a gripper (4) according to one of the preceding claims, wherein the gripper (4) is located at an end of a robot arm (2) and wherein the robot is a mobile robot with wheels for driving.

12. Method with the following steps:
providing a limp object (1000),
providing a gripper (4) or a robot according to one of the preceding claims,
positioning the gripper (4) so that the gripper gears (10, 8) touch the object (1000),
rotating of the gripper gears (10, 8) in such a way that the object (1000) is clamped between the gripper gears (10, 8).

13. Method according to the preceding claim and further with the steps detecting a quantity that depends on a torque for the rotation of the gripper gears, comparing the measured quantity with a threshold value and stopping the rotation of the gripper gears (10, 8) when the threshold value is reached and/or exceeded.

14. Method according to the preceding claim,
wherein the detected quantity is a current required for rotating the gripper gears (10, 8) or a power required for this.

15. Method according to any of claims 12 to 14 and further comprising the steps of
transporting the limp object (1000) in its clamped state from a first location to a second location, and
rotating the first gripper gears (10, 8) at the second location so that the object (1000) is deposited at the second location,
wherein a robot according to claim 11 is provided and wherein the transporting comprises driving the robot.

## Revendications

1. Dispositif de préhension (4) pour la préhension d'objets (1000) souples, qui présente :
une première roue dentée de préhension (10), qui est conçue pour la rotation autour d'un premier axe de rotation,
une deuxième roue dentée de préhension (8), qui est conçue pour la rotation autour d'un deuxième axe de rotation,
**caractérisé en ce que**
la première roue dentée de préhension (10) et la deuxième roue dentée de préhension (8) sont disposées de telle sorte qu'elles viennent en prise l'une avec l'autre et de telle sorte que l'objet (1000) souple peut être serré entre les roues dentées de préhension (10, 8) par rotation de la première roue dentée de préhension (10) et de la deuxième roue dentée de préhension (8),
les axes de rotation ayant une distance fixe l'un par rapport à l'autre.

2. Dispositif de préhension (4) selon la revendication 1, **caractérisé en ce que** les première et deuxième roues dentées de préhension (10, 8) présentent respectivement un rayon maximum R et **en ce que** les axes de rotation sont parallèles l'un à l'autre, et la distance fixe des axes de rotation étant d et l'équation suivante étant satisfaite : d < 2R, de préférence d < 0,9 x 2R, de manière davantage préférée d < 0,8 x 2R, par exemple d < 0,6 x 2R.

3. Dispositif de préhension (4) selon l'une quelconque des revendications précédentes, **caractérisé en ce que** le dispositif de préhension (4) présente une unité de moteur et de contrôle (20) et le dispositif de préhension (4) est aménagé de telle sorte que l'unité de moteur et de contrôle (20) entraîne les roues dentées de préhension (10, 8).

4. Dispositif de préhension (4) selon la revendication précédente, **caractérisé en ce que** le dispositif de préhension (4) présente une transmission entre l'unité de moteur et de contrôle (20) et les roues dentées de préhension (8, 10), la transmission étant conçue pour démultiplier une rotation de l'unité de moteur et de contrôle (20) en vitesse lente.

5. Dispositif de préhension (4) selon l'une des deux revendications précédentes, **caractérisé en ce que** le dispositif de préhension (4) présente un capteur de couple, qui est conçu pour détecter une grandeur, qui dépend d'un couple pour la rotation des roues dentées de préhension (10, 8) .

6. Dispositif de préhension (4) selon la revendication précédente, **caractérisé en ce que** l'unité de moteur et de contrôle (20) présente un moteur électrique pour l'entraînement des roues dentées de préhension (10) et **en ce que** le capteur de couple est configuré en tant qu'ampèremètre ou wattmètre, qui est aménagé pour détecter un courant nécessaire à la rotation des roues dentées de préhension (10) ou une puissance nécessaire pour ce faire.

7. Dispositif de préhension (4) selon l'une des deux revendications précédentes, **caractérisé en ce que** l'unité de moteur et de contrôle (20) est aménagée pour comparer la grandeur détectée avec une valeur seuil et interpréter une atteinte ou un dépassement de la valeur seuil en tant que procédé de préhension réussi et/ou empêcher une rotation supplémentaire des roues dentées de préhension (10, 8) lors de l'atteinte ou du dépassement de la valeur seuil.

8. Dispositif de préhension (4) selon l'une quelconque des revendications précédentes, **caractérisé en ce que** le dispositif de préhension (4) présente un limiteur de couple.

9. Dispositif de préhension (4) selon l'une quelconque des revendications précédentes, **caractérisé en ce que** le dispositif de préhension (4) présente un boîtier (6) avec une plaque de fermeture (62) et les roues dentées de préhension (10, 8) s'étendent à travers la plaque de fermeture (62), les roues dentées de préhension (10, 8) présentant un revêtement adhésif.

10. Dispositif de préhension (4) selon l'une quelconque des revendications précédentes, **caractérisé en ce que** le dispositif de préhension (4) présente un capteur de distance ou un capteur de proximité, qui est conçu pour détecter une distance entre le dispositif de préhension (4) et un objet (1000) à saisir ou pour détecter à quel moment le dispositif de préhension (4) s'approche d'un objet (1000) à saisir.

11. Robot avec un dispositif de préhension (4) selon l'une quelconque des revendications précédentes, **caractérisé en ce que** le dispositif de préhension (4) est disposé à une extrémité d'un bras de robot (2) et **en ce que** le robot est un robot mobile avec des roues pour le déplacement.

12. Procédé avec les étapes suivantes :
fourniture d'un objet (1000) souple,
fourniture d'un dispositif de préhension (4) ou d'un robot selon l'une quelconque des revendications précédentes,
positionnement du dispositif de préhension (4) de telle sorte que les roues dentées de préhension (10, 8) touchent l'objet (1000),
rotation des roues dentées de préhension (10, 8) de telle sorte que l'objet (1000) est serré entre les roues dentées de préhension (10, 8).

13. Procédé selon la revendication précédente et en outre avec les étapes de
détection d'une grandeur, qui dépend d'un couple pour la rotation des roues dentées de préhension,
comparaison de la grandeur détectée avec une valeur seuil et arrêt de la rotation des roues dentées de préhension (10, 8), lorsque la valeur seuil est atteinte ou dépassée.

14. Procédé selon la revendication précédente,
**caractérisé en ce que** la grandeur détectée est un courant nécessaire à la rotation des roues dentées de préhension (10, 8) ou une puissance nécessaire pour ce faire.

15. Procédé selon l'une quelconque des revendications 12 à 14 et en outre avec les étapes de
transport de l'objet (1000) souple à l'état serré d'un premier endroit à un deuxième endroit, et
rotation des premières roues dentées de préhension (10, 8) au deuxième endroit de telle sorte que l'objet (1000) est déposé au deuxième endroit,
**caractérisé en ce qu'**un robot selon la revendication 11 est fourni et **en ce que** le transport comprend le déplacement du robot.
